# EUROPÄISCHE PATENTSCHRIFT

(11) **EP 2 762 237 B1**
(45) Veröffentlichungstag und Bekanntmachung des Hinweises auf die Patenterteilung: **21.10.2015**
(21) Anmeldenummer: 13002887.1
(22) Anmeldetag: 05.06.2013
(51) Int. Cl.: B05B 7/04, B05B 7/14, B05B 12/14, B05B 7/24, A01M 7/00

(54) **Rückengetragenes Sprühgerät**
Back-mounted sprayer
Appareil de vaporisation porté sur le dos

(30) Priorität: 31.01.2013 DE 102013001779
(43) Veröffentlichungstag der Anmeldung: 06.08.2014
(73) Patentinhaber: Andreas Stihl AG & Co. KG, 71336 Waiblingen (DE)
(72) Erfinder: Bähr, Christine, 73061 Ebersbach/Fils (DE); Schliemann, Harald, 71334 Waiblingen (DE)
(74) Vertreter: Reinhardt, Annette

(56) Entgegenhaltungen:
- EP-A2- 1 782 889
- FR-A- 1 101 149
- US-A1- 2008 172 826
- Anonymous: "Twister XL3 Motorized Knapsack ULV Sprayer", Dynafog.com , 27. August 2012 (2012-08-27), XP002723686, Gefunden im Internet: URL:http://web.archive.org/web/20120827013 711/http://dynafog.com/international/ulv/p iston_engine/twister_xl/index.htm [gefunden am 2014-04-25]

## Beschreibung

Die Erfindung betrifft ein rückengetragenes Sprühgerät der im Oberbegriff des Anspruchs 1 angegebenen Gattung.

Aus der DE 10 2007 023 409 A1 ist ein rückengetragenes Sprühgerät mit einer Rückentrage bekannt. Die Rückentrage endet unterhalb der mittleren Höhe des Sprühmittelbehälters. Der Sprühmittelbehälter besitzt eine Vertiefung für die Rückentrage, so dass der Sprühmittelbehälter und die Rückentrage an der dem Bediener zugewandten Seite näherungsweise bündig miteinander abschließen und eine näherungsweise ebene Fläche bilden.

**Die Veröffentlichung "Twister XL³ Motorized Knapsack ULV Sprayer", www.dynafog.com, zeigt ein Sprühgerät, dessen Rückentrage als Gestell aus miteinander verbundenen Rohren aufgebaut ist. An dem Bereich des Gestells, der im Betrieb dem Rücken eines Bedieners zugewandt ist, liegt ein Rückenpolster an.**

**Die** FR 1.101.149 A **zeigt ein Sprühgerät, dessen Rückentrage eine Rückenplatte besitzt, die sich bis zum unteren Bereich des Sprühmittelbehälters erstreckt.**

**Die** US 2008/0172826 A1 **zeigt ein Sprühgerät, bei dem der Sprühmittelbehälter in den unteren Bereich der Rückentrage integriert ist. Auf diesem Bereich der Rückentrage ist das Blasaggregat festgelegt.**

Der Erfindung liegt die Aufgabe zugrunde, ein rückengetragenes Sprühgerät der gattungsgemäßen Art zu schaffen, das einen erhöhten Bedien- und Tragekomfort besitzt.

Diese Aufgabe wird durch ein rückengetragenes Sprühgerät mit den Merkmalen des Anspruchs 1 gelöst.

Es hat sich gezeigt, dass beim Einfüllen von Sprühmittel trotz der bekannten, sehr großen Einfüllöffnung Sprühmittel verschüttet werden kann. Dieses Sprühmittel kann am Sprühmittelbehälter entlang laufen und an die dem Bediener zugewandte Seite der Rückentrage gelangen. Das Sprühmittel kann dabei auch an ein an der Rückentrage angeordnetes Rückenpolster gelangen. Ein Kontakt des Sprühmittels mit dem Rückenpolster oder Schultergurten der Rückentrage und ein Kontakt des Bedieners mit Sprühmittel ist unerwünscht.

Um einen Kontakt des Bedieners mit Sprühmittel an der Rückentrage zu vermeiden, ist nun vorgesehen, dass die senkrecht zur Abstellfläche gemessene Höhe der Rückentrage mindestens etwa 80% der senkrecht zur Abstellfläche gemessenen Gesamthöhe des Sprühgeräts beträgt. Die Rückentrage erstreckt sich demnach mindestens in einem Bereich über einen Großteil der Gesamthöhe des Sprühgeräts. Wenn der Bediener die Rückentrage auf dem Rücken trägt, kann dadurch ein Kontakt des Bedieners mit verschüttetem Sprühmittel weitgehend vermieden werden. Dadurch, dass die Rückentrage sich über einen Großteil der Gesamthöhe des Sprühgeräts erstreckt, kann weitgehend vermieden werden, dass verschüttetes Sprühmittel an die dem Bediener zugewandte Seite der Rückentrage gelangen kann. Auch ein Kontakt des Bedieners mit dem Sprühmittelbehälter, an dem verschüttetes Sprühmittel herunterlaufen kann, kann durch die vergleichsweise große Höhe der Rückentrage weitgehend vermieden werden. Der Bediener muss beim Einfüllen von Sprühmittel keine übermäßige Sorgfalt walten lassen, da verschüttetes Sprühmittel nicht zu einem Rückenpolster oder Schultergurten der Rückentrage gelangen kann, so dass sich eine komfortable Bedienung ergibt.

Vorteilhaft beträgt die senkrecht zur Abstellfläche gemessene Höhe der Rückentrage mindestens etwa 90% der senkrecht zur Abstellfläche gemessenen Gesamthöhe des Sprühgeräts. Die Rückentrage deckt dadurch den Sprühmittelbehälter in Richtung zum Bediener weitgehend ab.

Die Einfüllöffnung des Sprühmittelbehälters ist vorteilhaft an einem Einfüllstutzen ausgebildet. Der Einfüllstutzen geht vorteilhaft an einer Kante in die Oberseite des Sprühmittelbehälters über. Die Kante kann dabei beispielsweise ringförmig um den Einfüllstutzen verlaufen. Der senkrecht zur Abstellfläche und benachbart zur Rückentrage gemessene Abstand der Kante zur Abstellfläche ist vorteilhaft kleiner als die Höhe der Rückentrage. Dadurch überragt die Rückentrage die Kante in Abstellposition. An der Oberseite verbreitert sich der Sprühmittelbehälter gegenüber dem Einfüllstutzen üblicherweise und ragt auch in Richtung zum Bediener. Dieser zum Bediener ragende Bereich wird durch die Rückentrage, die die Kante in Abstellposition überragt, vom Bediener abgeschirmt. Dadurch kann ein Kontakt des Bedieners mit diesem Bereich des Sprühmittelbehälters im Betrieb, also wenn der Bediener die Rückentrage am Rücken trägt, weitgehend vermieden werden.

**In** Abstellposition **liegt** mindestens ein Bereich der **Rückenplatte** höher als mindestens ein Bereich der Unterkante des Deckels des Sprühmittelbehälters. Die **Rückenplatte** ragt mindestens bis auf die Höhe der Unterkante des Deckels. Dabei muss die **Rückenplatte** nicht über ihre gesamte Breite bis auf die Höhe der Unterkante des Deckels ragen. Bereits wenn ein Bereich der **Rückenplatte** höher als ein Bereich der Unterkante des Deckels liegt, kann ein Kontakt des Bedieners mit Sprühmittel weitgehend vermieden werden. Bei uneben ausgebildetem oder schräg angeordnetem Deckel ist es zur weitgehenden Vermeidung eines Kontakts des Bedieners mit Sprühmittel ausreichend, wenn ein Bereich der Unterkante des Deckels tiefer als ein Bereich der Rückentrage liegt. Die Begriffe "höher" und "tiefer" beziehen sich dabei auf die senkrechte Richtung, also die Wirkrichtung der Schwerkraft in Abstellposition.

Dadurch, dass mindestens ein Bereich der **Rückenplatte** höher als mindestens ein Bereich des Deckels liegt, ist der Bereich der **Rückenplatte** zwischen dem Sprühmittelbehälter und dem Bediener angeordnet und schützt den Bediener vor Kontakt mit dem Sprühmittelbehälter. Dadurch, dass die **Rückenplatte** höher ragt als die Unterkante des Deckels des Sprühmittelbehälters, kann Sprühmittel, das an der Einfüllöffnung des Sprühmittelbehälters verschüttet wurde, nicht an die dem Bediener zugewandte Seite der Rückentrage herunter laufen. Dadurch ist ein Kontakt des Bedieners mit Sprühmittel an der Rückentrage im Betrieb sicher vermieden.

Dadurch, dass in Abstellposition mindestens ein Bereich der **Rückenplatte** höher liegt als mindestens ein Bereich der Unterkante des Deckels, besitzt dieser Bereich in Abstellposition einen größeren Abstand zur Abstellfläche als der Bereich der Unterkante des Deckels. Die dem Sprühmittelbehälter zugewandte Seite des Deckels kann auch unregelmäßig, beispielsweise wellig, ausgebildet sein. Die Unterkante des Deckels setzt sich dann aus den dem Sprühmittelbehälter jeweils am nächsten liegenden Bereichen zusammen, ist also keine durchgängige Linie.

Vorteilhaft liegt der Bereich der Rückentrage in Abstellposition höher als der der Rückentrage zugewandte Bereich der Unterkante des Deckels. Die Unterkante des Deckels liegt vorteilhaft in einer ersten gedachten Ebene, wobei diese Ebene die Rückentrage benachbart zu dem mindestens einen Bereich der Rückentrage schneidet. Die Rückentrage erstreckt sich bis auf die Höhe der Unterkante des Deckels und ragt in dem mindestens einen Bereich der Rückentrage in senkrechter Richtung gesehen über die Unterkante des Deckels hinaus.

Der Bereich der Rückentrage, der in Abstellposition höher liegt als der mindestens eine Bereich der Unterkante des Deckels, besitzt vorteilhaft eine Breite, die mindestens etwa 80% des Außendurchmessers des Einfüllstutzens beträgt. Der Außendurchmesser des Einfüllstutzens ist in der gedachten Ebene gemessen, in der die Unterkante des Deckels liegt. Die Breite des Bereichs der Rückentrage ist dabei in einer Ebene parallel zur Abstellfläche des Sprühgeräts, insbesondere in der gedachten Ebene, in der die Unterkante des Deckels liegt, gemessen. Der Bereich der Rückentrage ist dabei vorteilhaft so angeordnet, dass er im Betrieb zwischen dem Einfüllstutzen und dem Bediener liegt. Die Breite des Bereichs der Rückentrage ist insbesondere mindestens so groß wie der Außendurchmesser des Einfüllstutzens, besonders vorteilhaft mindestens etwa 1,2mal so groß.

Die Unterkante des Deckels liegt vorteilhaft in Abstellposition näherungsweise horizontal. Die erste gedachte Ebene schließt mit der Abstellfläche vorteilhaft einen Winkel von weniger als etwa 10°, insbesondere von weniger als etwa 5°, besonders vorteilhaft von etwa 2° ein. Bei üblichen Deckelgestaltungen ergibt sich dadurch ein näherungsweise vertikal ausgerichteter Einfüllstutzen des Sprühmittelbehälters und eine etwa horizontal ausgerichtete Oberkante des Einfüllstutzens. Dadurch ist ein einfaches Einfüllen von Sprühmittel gewährleistet. Vorteilhaft besteht der Winkel bei leerem Sprühmittelbehälter. Aufgrund des Gewichts des Sprühmittels kann sich ein den Sprühmittelbehälter mit der Rückentrage verbindendes Teil, beispielsweise ein Trägerteil, elastisch verformen. Der Winkel ist vorteilhaft so gewählt, dass die Unterkante des Deckels in Abstellposition bei vollständig gefülltem Sprühmitteltank parallel zur Abstellfläche, also horizontal verläuft.

Vorteilhaft ist der parallel zur Abstellfläche gemessene Abstand des Einfüllstutzens zur Rückentrage kleiner als die Hälfte des Außendurchmessers des Einfüllstutzens. Der Abstand des Einfüllstutzens zur Rückentrage beträgt vorteilhaft weniger als etwa 40%, insbesondere weniger als etwa 30% des Außendurchmessers des Einfüllstutzens. Der Abstand des Einfüllstutzens zur Rückentrage beträgt vorteilhaft weniger als etwa 8 cm, insbesondere weniger als etwa 6 cm. Als besonders vorteilhaft hat sich ein Abstand von etwa 3 cm bis etwa 6 cm erwiesen. Der Sprühmittelbehälter ist vorteilhaft nah an der Rückentrage angeordnet. Insbesondere berührt der Sprühmittelbehälter die Rückentrage. Dadurch ergibt sich eine günstige Gewichtsverteilung. Je näher der Schwerpunkt des Sprühmittelbehälters am Benutzer, also auch an der Rückenplatte der Rückentrage liegt, umso kleiner ist das vom Sprühmittelbehälter an der Rückentrage erzeugte Biegemoment, das vom Benutzer abgefangen werden muss. Durch einen geringen oder kleinen Abstand zwischen Sprühmittelbehälter und Rückentrage kann die Belastung des Bedieners verringert werden. Der Sprühmittelbehälter ist dabei insbesondere in Abstellposition oberhalb des Blasaggregats angeordnet.

Vorteilhaft überdeckt die Rückentrage den Sprühmittelbehälter in der in Abstellposition horizontal liegenden Richtung weitgehend. Die maximale Breite der Rückentrage beträgt vorteilhaft mindestens etwa 85% der Breite des Sprühmittelbehälters. Sowohl die Breite der Rückentrage als auch die Breite des Sprühmittelbehälters sind dabei parallel zur Abstellfläche gemessen. Die Rückentrage ist im Bereich des Sprühmittelbehälters näherungsweise als flächige Platte ausgebildet, wobei die Platte eine Formfläche ist und Versteifungsstreben oder unterschiedliche Dicken besitzen kann. Die Breite der Rückentrage ist vorteilhaft parallel zur Abstellfläche und etwa parallel zur Fläche der Rückenplatte der Rückentrage gemessen. Die Breite des Sprühmittelbehälters ist parallel zur Breite der Rückentrage gemessen. Die Breite der Rückentrage erstreckt sich vorteilhaft parallel zur Querrichtung des Bedieners, also zur Seitenrichtung. Die Breite der Rückentrage beträgt vorteilhaft in jeder parallel zur Abstellfläche verlaufenden Ebene mindestens 80% der Breite des Sprühmittelbehälters in dieser Ebene. In jeder Schnittebene der Rückentrage parallel zur Abstellfläche kann ein die Rückentrage umschließendes kleinstes Rechteck eingezeichnet werden, wobei die lange Seite des Rechtecks der Breite der Rückentrage und die kurze Seite des Rechtecks der Tiefe der Rückentrage entspricht.

Der Sprühmittelbehälter verläuft in dem an die Rückentrage angrenzenden Bereich des Sprühmittelbehälters näherungsweise eben und ist in Abstellposition steil abfallend, insbesondere näherungsweise senkrecht ausgerichtet. Der an die Rückentrage angrenzende, steil abfallende Bereich des Sprühmittelbehälters ist in der Höhe vorzugsweise vollständig von der Rückentrage abgedeckt. Der Abstand des oberen Abschnitts des steil abfallenden Bereichs des Sprühmittelbehälters zur Abstellfläche ist vorteilhaft kleiner als die Höhe der Rückenplatte in diesem Bereich. Die Rückentrage ragt in Abstellposition in senkrechter Richtung über den steil abfallenden Bereich des Sprühmittelbehälters hinaus.

Vorteilhaft umfasst die Rückentrage eine Rückenplatte und eine Bodenplatte. An ihrer der Bodenplatte abgewandt liegenden Oberkante ist die Rückentrage vorteilhaft zum Sprühmittelbehälter hin umgebogen. Dadurch wird ein gerundeter Übergang an der Rückenplatte geschaffen, und ein Kontakt des Bedieners mit einer scharfen Kante der Rückentrage wird vermieden. Die umgebogene Oberkante erhöht außerdem die Stabilität der Rückentrage. Vorteilhaft ist die Rückenplatte an dem gesamten am Sprühmittelbehälter angeordneten Bereich an ihrem Rand zum Sprühmittelbehälter hin umgebogen. Der umgebogene Rand verhindert auch, dass beispielsweise bei liegendem Sprühgerät verschüttetes Sprühmittel an den Rand der Rückenplatte und von dort, beispielsweise, wenn das Sprühgerät wieder aufgestellt wird, an die dem Bediener zugewandte Seite der Rückenplatte und an Schultergurte oder ein Schulterpolster der Rückentrage gelangen kann. Der Rand fängt verschüttetes Sprühmittel auch seitlich auf.

Um ein gezieltes Ableiten des gesammelten Sprühmittels zum Boden zu erreichen, ist vorgesehen, dass die Bodenplatte mindestens eine Ablauföffnung besitzt. Der parallel zur Abstellfläche gemessene Abstand der Ablauföffnung zu der einem Bediener zugewandten Seite der Rückenplatte beträgt dabei vorteilhaft mindestens etwa 3 cm. Dadurch wird vermieden, dass Sprühmittel auf die Füße und Beine des Bedieners tropfen kann. Als besonders vorteilhaft hat sich ein Abstand von etwa 4,5 cm bis etwa 6 cm herausgestellt.

Ein einfacher und stabiler konstruktiver Aufbau ergibt sich, wenn der Sprühmittelbehälter an der Rückentrage über ein Trägerteil gehalten ist. Das Trägerteil besitzt vorteilhaft mindestens eine Ablauföffnung für Sprühmittel. Das Trägerteil kann Sprühmittel, das am Sprühmittelbehälter entlang nach unten läuft, auffangen und über die mindestens eine Ablauföffnung des Trägerteils zur Ablauföffnung der Bodenplatte leiten. Die Ablauföffnung ist vorteilhaft in dem der Rückenplatte der Rückentrage zugewandten Bereich angeordnet. Vorteilhaft beträgt der Abstand der Ablauföffnung zur Rückenplatte weniger als etwa die Hälfte der Tiefe des Trägerteils. Die Tiefe des Trägerteils ist dabei etwa senkrecht zur Rückenplatte gemessen.

Vorteilhaft besitzt das Blasaggregat einen Antriebsmotor und ein von dem Antriebsmotor angetriebenes Gebläserad, die in einem Gehäuse angeordnet sind. Der Antriebsmotor kann beispielsweise ein Verbrennungsmotor oder ein Elektromotor sein. Der Elektromotor kann über ein Stromkabel oder von einer Batterie oder einem Akku mit Energie versorgt sein. Zwischen dem Blasaggregat und der Rückenplatte ist vorteilhaft ein Zwischenraum gebildet. Über den Zwischenraum kann Sprühmittel in Abstellposition und im Betrieb nach unten zur Bodenplatte geleitet werden. Vorteilhaft ist mindestens eine Ablauföffnung in Abstellposition oberhalb einer Gehäusewand des Gehäuses angeordnet, die zu dem Zwischenraum hin abfällt. Dadurch wird gewährleistet, dass auf das Gehäuse tropfendes Sprühmittel nicht in Richtung zum Antriebsmotor gelangen kann, sondern in den Zwischenraum abgeleitet wird. Dadurch wird ein Benetzen des Antriebsmotors mit Sprühmittel und dadurch eine Korrosion des Antriebsmotors vermieden. Auch ein Kontakt von Bedienelementen des Antriebsmotors wie beispielsweise ein Anwerfgriff oder Bedienelementen für Choke oder Purger wird vermieden. Vorteilhaft ist mindestens eine Ablauföffnung in Abstellposition oberhalb des Zwischenraums angeordnet. Über diese Ablauföffnung kann Sprühmittel unmittelbar in den Zwischenraum und von dort zur Bodenplatte gelangen und über die Ablauföffnung in der Bodenplatte abgeführt werden.

Vorteilhaft ist mindestens eine Ablauföffnung zwischen dem Trägerteil und der Rückenplatte ausgebildet. Insbesondere sind mehrere Ablauföffnungen in unterschiedlichen Bereichen des Sprühmittelbehälters vorgesehen, so dass Sprühmittel unabhängig davon, an welcher Stelle des Sprühmittelbehälters der Bediener Sprühmittel verschüttet, zuverlässig zum Trägerteil und zur Bodenplatte abgeleitet werden kann.

Ein Ausführungsbeispiel der Erfindung wird im Folgenden anhand der Zeichnung erläutert. Es zeigen:
- Fig. 1: eine perspektivische Darstellung eines Sprühgeräts,
- Fig. 2: eine Ansicht auf das Sprühgerät aus Fig. 1 von der dem Bediener abgewandten Seite,
- Fig. 3: eine Seitenansicht des Sprühgeräts aus Fig. 1 von der dem Bediener zugewandten Seite,
- Fig. 4: einen Schnitt entlang der Linie IV-IV in Fig. 3 und in Fig. 5,
- Fig. 5: einen Schnitt entlang der Linie V-V in Fig. 3,
- Fig. 6: eine perspektivische Darstellung des Sprühgeräts mit abgenommenem Sprühmitteltank und abgenommenem Blasrohr,
- Fig. 7: eine Draufsicht auf das Sprühgerät aus Fig. 6,
- Fig. 8: eine Seitenansicht der Rückentrage von der dem Bediener abgewandten Seite.

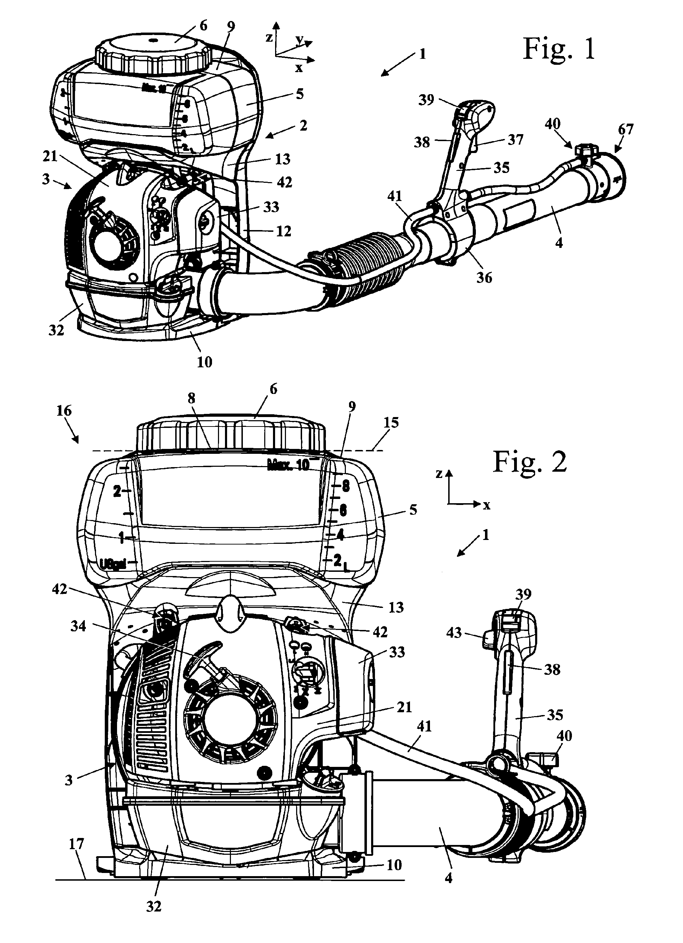

Fig. 1 zeigt ein rückengetragenes Sprühgerät 1. Das Sprühgerät 1 besitzt eine Rückentrage 2, an der ein Blasaggregat 3 und ein Sprühmittelbehälter 5 festgelegt sind. Das Blasaggregat 3 fördert einen Luftstrom durch ein Blasrohr 4, das eine Austrittsöffnung 67 für den Luftstrom besitzt. Das Sprühgerät 1 besitzt eine Sprühmittelleitung 41 und ein Dosierventil 40, über die dem durch das Blasrohr 4 geförderten Luftstrom benachbart zur Austrittsöffnung 67 Sprühmittel zugeführt wird. Das Blasaggregat 3 umfasst einen in Fig. 1 nicht gezeigten, in einem Gehäuse 21 angeordneten Antriebsmotor, der im Ausführungsbeispiel als Verbrennungsmotor ausgebildet ist. Der Antriebsmotor kann auch ein Elektromotor sein. Das Sprühgerät 1 besitzt einen Kraftstofftank 32, aus dem dem Antriebsmotor Kraftstoff zugeführt wird. Das Gehäuse 21 umfasst einen Luftfilterdeckel 33, der zur Reinigung eines benachbart zum Luftfilterdeckel 33 im Gehäuse 21 angeordneten Luftfilters abnehmbar ist.

Die Rückentrage 2 umfasst eine Rückenplatte 12, die im Betrieb benachbart zum Rücken eines Bedieners angeordnet ist. Außerdem besitzt die Rückentrage 2 eine Bodenplatte 10, die etwa senkrecht zur Rückenplatte 12 ausgerichtet ist und auf der der Kraftstofftank 32 festgelegt sein kann. Mit der Bodenplatte 10 kann das Sprühgerät 1 auf dem Boden abgestellt werden. Hierzu kann die Bodenplatte 10 Standfüße besitzen. Der Sprühmittelbehälter 5 liegt auf einem an der Rückenplatte 12 festgelegten Trägerteil 13 auf. Das Trägerteil 13 kann beispielsweise ein Spritzgussteil aus Kunststoff sein. An seiner dem Blasaggregat 3 abgewandten Oberseite 9 besitzt der Sprühmittelbehälter 5 eine von einem Deckel 6 verschlossene Einfüllöffnung.

Zur Bedienung des Antriebsmotors und zum Führen des Blasrohrs 4 ist ein Handgriff 35 vorgesehen, der über eine Manschette 36 am Blasrohr 4 festgelegt ist. An der Manschette 36 ist auch die Sprühmittelleitung 41 geführt. Am Handgriff 35 sind ein Gashebel 37, eine Gashebelsperre 38, ein Stoppschalter 39 sowie ein in Fig. 2 gezeigter Bedienhebel 43 angeordnet. Der Bedienhebel 43 dient vorteilhaft zur Arretierung der Stellung des Gashebels 37.

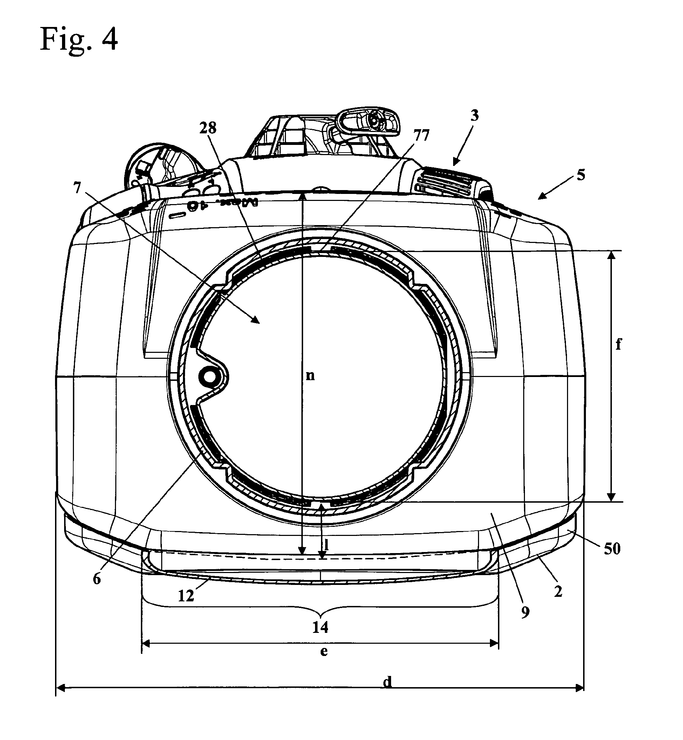

Wie Fig. 1 zeigt, erstreckt sich das Sprühgerät 1 in den Raumrichtungen x, y und z. Die Raumrichtungen x, y und z sind senkrecht zueinander ausgerichtet. Die Bodenplatte 10 erstreckt sich im Wesentlichen in den Raumrichtungen x und y. Die Rückenplatte 12 der Rückentrage 2 besitzt ihre größten Erstreckungen in den Raumrichtungen x und z. Die Oberseite 9 des Sprühmittelbehälters 9 ist die in der Raumrichtung z oben liegende, auch in Fig. 4 gezeigte Seite. In Raumrichtung z ist der Sprühmittelbehälter 5 oberhalb des Blasaggregats 3 angeordnet.

Fig. 2 zeigt das Sprühgerät 1 in einer Abstellposition 16, in der das Sprühgerät 1 auf einer horizontalen, ebenen Abstellfläche 17 steht. Dabei steht die Bodenplatte 10 auf der Abstellfläche 17 auf. Die Abstellfläche 17 erstreckt sich in den Raumrichtungen x und y. Die Raumrichtung z erstreckt sich senkrecht zur Abstellfläche 17 nach oben. Der Kraftstofftank 32 ist in Abstellposition 16 unterhalb des Blasaggregats 3 angeordnet und der Sprühmittelbehälter 5 oberhalb des Blasaggregats 3. Das Blasaggregat 3 ist über Antivibrationselemente 42 an der Rückenplatte 12 der Rückentrage 2 festgelegt. Wie Fig. 2 auch zeigt, ragt ein Anwerfgriff 34 aus dem Gehäuse 21.

Der Deckel 6 besitzt eine dem Sprühmittelbehälter 9 und dem Blasaggregat 3 zugewandt liegende Unterkante 8. Die Unterkante 8 liegt in einer ersten gedachten Ebene 15. Im Ausführungsbeispiel ist die Unterkante 8 des Deckels 6 eben ausgebildet. Es kann jedoch auch eine uneben, beispielsweise wellig oder gezackt verlaufende Unterseite vorgesehen sein. In diesem Fall ist die gedachte Ebene 15 die Ebene, die die am weitesten zum Sprühmittelbehälter 5 bzw. in Richtung zur Abstellfläche 17 ragenden Punkte der Unterseite des Deckels 6 verbindet. Die Unterkante 8 ist dann keine durchgängige Kante, sondern wird durch einzelne Abschnitte oder Punkte des Deckels 6 gebildet. Wird der Deckel 6 mit seiner dem Sprühmittelbehälter 5 zugewandten Seite auf einer ebenen, horizontalen Fläche aufgelegt, so bilden die Kontaktpunkte des Deckels 6 mit der Fläche die Unterkante 8. Die ebene, horizontale Fläche entspricht der gedachten Ebene 15.

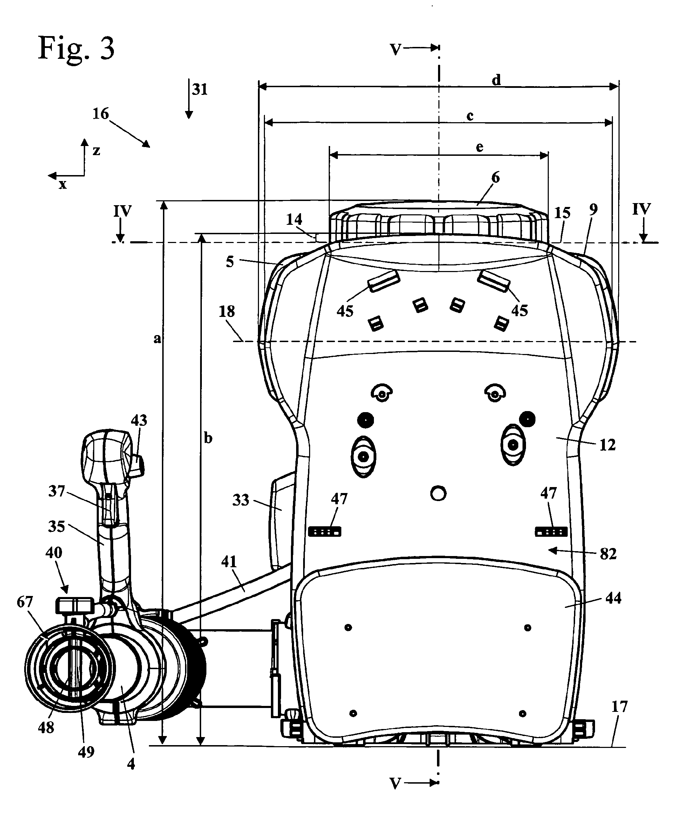

Wie Fig. 3 zeigt, erstreckt sich die Rückenplatte 12 in Abstellposition 16 bis auf die Höhe der Unterkante 8 des Deckels 6 und ragt nach oben über die Unterkante 8 hinaus. In der in Fig. 3 gezeigten Darstellung ist die Unterkante 8 von der Rückenplatte 12 vollständig verdeckt. Auch in seitlicher Richtung überdeckt die Rückenplatte 12 den Sprühmittelbehälter 5 weitgehend. In der in Fig. 3 gezeigten Seitenansicht auf die Rückenplatte 12 von einer dem Bediener im Betrieb zugewandten Seite 82 ist lediglich ein schmaler Rand des Sprühmittelbehälters 5 sichtbar. In Blickrichtung senkrecht auf die Fläche der Rückenplatte 12 von der am Rücken des Bedieners anzuordnenden Seite 82 der Rückenplatte 12 ist der Sprühmittelbehälter 5 weitgehend von der Rückenplatte 12 verdeckt. Die Rückenplatte 12 verdeckt in dieser Blickrichtung vorteilhaft mindestens 80%, insbesondere mindestens 90% der Fläche des Sprühmittelbehälters 5. Die Rückenplatte 12 besitzt einen Bereich 14, der höher liegt als die Unterkante 8 des Deckels 6. Im Ausführungsbeispiel entspricht die Breite e des Bereichs 14 der Rückenplatte 12 dem Außendurchmesser des Deckels 6. In Fig. 3 ist ein Pfeil 31 gezeigt, der die senkrechte Richtung angibt. Der Pfeil 31 verläuft parallel zur Raumrichtung z, aber in entgegengesetzter Richtung. In senkrechter Richtung, also in Richtung des Pfeils 31, liegt der Bereich 14 der Rückenplatte 12 oberhalb des Bereichs der Unterkante 8 des Deckels 6, der der Rückentrage 12 zugewandt liegt. Die gedachte Ebene 15 ist auf der Höhe eingezeichnet, auf der die Unterkante 8 des Deckels 6 an der der Rückenplatte 12 zugewandten Seite liegt.

Wie Fig. 3 zeigt, besitzt die Rückenplatte 12 in der Raumrichtung x eine maximale Breite c. Die maximale Breite c der Rückenplatte 12 ist geringfügig kleiner als die maximale Breite d des Sprühmittelbehälters 5. Die maximale Breite d des Sprühmittelbehälters 5 ist dabei ebenfalls in Raumrichtung x gemessen. Die Breite c der Rückenplatte 12, die Breite d des Sprühmittelbehälters 5 und die Breite e des Bereichs 14 der Rückenplatte 12 sind jeweils parallel zur Abstellfläche 17 gemessen. Die maximalen Breite der Rückenplatte 12 c und die maximale Breite d des Sprühmittelbehälters 5 sind dabei in der gleichen zweiten gedachten Ebene 18 gemessen. Die Rückenplatte 12 und der Sprühmittelbehälter 5 besitzen ihre größte Breite c bzw. d auf der gleichen Höhe. Die maximale Breite c der Rückenplatte 12 beträgt mindestens etwa 85% der maximalen Breite d des Sprühmittelbehälters 5. Die Breite c der Rückenplatte 12 beträgt dabei in jeder parallel zur Abstellfläche 17 verlaufenden Ebene mindestens etwa 80% der maximalen Breite d des Sprühmittelbehälters 5 in der gleichen Ebene. Dadurch deckt die Rückenplatte 12 den Sprühmittelbehälter 5 weitgehend ab. Die Rückenplatte 12 und der Sprühmittelbehälter 5 sind dabei in diesem Bereich vorteilhaft etwa spiegelsymmetrisch zu der in Fig. 3 eingezeichneten Schnittebene V-V, also zu einer den Sprühmittelbehälter 5 mittig teilenden Ebene ausgebildet.

Wie Fig. 3 auch zeigt, besitzt das Sprühgerät 1 eine Gesamthöhe a, die etwas größer als die Höhe b der Rückentrage 2 ist. Die Gesamthöhe a des Sprühgeräts 1 und die Höhe b der Rückentrage 2 sind dabei jeweils bis zur Abstellfläche 17 gemessen. Die Höhe b der Rückentrage 2 beträgt vorteilhaft mindestens etwa 80%, insbesondere mindestens etwa 90% der Gesamthöhe a des Sprühgeräts 1. Die Gesamthöhe a des Sprühgeräts 1 und die Höhe b der Rückentrage 2 sind dabei senkrecht zur Abstellfläche 17 gemessen. Die Richtung senkrecht zur Abstellfläche 17 entspricht der Raumrichtung z.

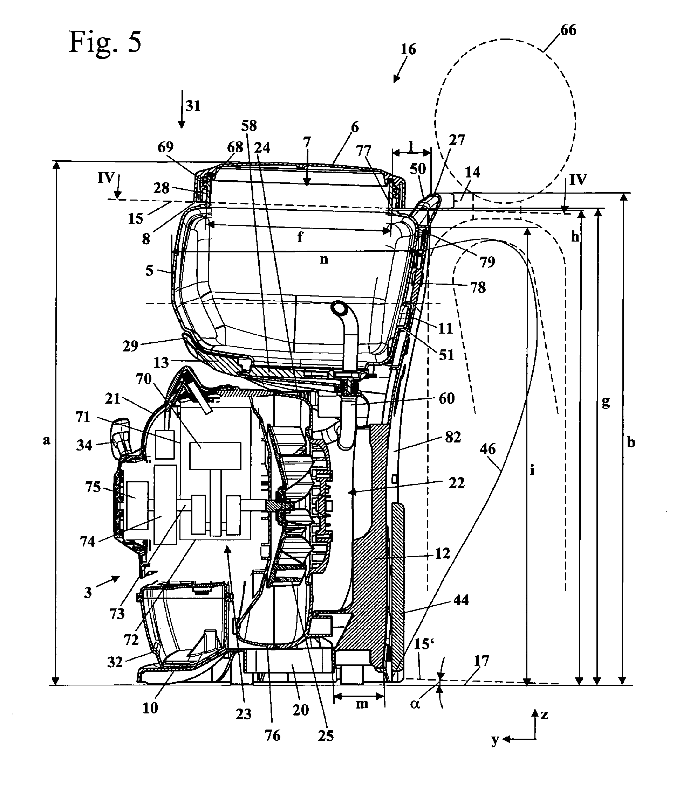

Wie Fig. 3 auch zeigt, besitzt die Rückenplatte 12 der Rückentrage 2 zwei obere Durchtrittsöffnungen 45 zur Befestigung von Schultergurten 46, von denen in Fig. 5 einer schematisch gezeigt ist. Die Schultergurte 46 werden mit ihrem unteren Ende benachbart zur Bodenplatte 10 an der Rückentrage 2 eingehängt. Vorteilhaft sind zwei Schultergurte 46 vorgesehen. In dem der Abstellfläche 17 zugewandten Bereich besitzt die Rückentrage 12 ein Rückenpolster 44, mit dem sich die Rückentrage 2 am unteren Rücken eines Bedieners abstützen kann.

Wie Fig. 3 auch zeigt, ist benachbart zum Dosierventil 40 im Blasrohr 4 eine Rippe 48 angeordnet, die quer durch das Blasrohr 4 verläuft und an der mindestens eine Austrittsöffnung 49 für Sprühmittel ausgebildet ist. Die Austrittsöffnung 49 ist vorteilhaft näherungsweise mittig im Blasrohr 4 angeordnet, so dass sich eine gute Verteilung des Sprühmittels im Blasluftstrom ergibt.

Fig. 4 zeigt einen Schnitt durch das Sprühgerät 1 auf Höhe der gedachten Ebene 15. Die gedachte Ebene 15 ist dabei nicht parallel zur Abstellfläche 17 ausgerichtet, sondern im Ausführungsbeispiel geringfügig zu dieser geneigt. Wie Fig. 4 zeigt, besitzt der Sprühmitteltank 5 eine Einfüllöffnung 7, die von dem Deckel 6 verschlossen wird. Die Einfüllöffnung 7 ist an einem Einfüllstutzen 28 ausgebildet, der als nach oben stehender, weitgehend zylindrischer Rand ausgebildet ist. Auf den Einfüllstutzen 28 ist der Deckel 6 aufgeschraubt. Der Einfüllstutzen 28 besitzt einen Außendurchmesser f. Der Außendurchmesser f ist dabei in der ersten gedachten Ebene 15 gemessen. Die Breite e des Bereichs 14 der Rückenplatte 12 ist im Ausführungsbeispiel etwas größer als der Außendurchmesser f des Einfüllstutzens 28. Vorteilhaft beträgt die Breite e des Bereichs 14 der Rückenplatte 12 mindestens etwa 80% des Außendurchmessers f des Einfüllstutzens 28, wobei sowohl die Breite e als auch der Außendurchmesser f in der gedachten Ebene 15 gemessen sind. Vorteilhaft ist die Breite e des Bereichs 14 der Rückenplatte 12 mindestens so groß wie der Außendurchmesser f des Einfüllstutzens 28, insbesondere größer als der Außendurchmesser f des Einfüllstutzens 28. Im Ausführungsbeispiel beträgt die Breite e des Bereichs 14 der Rückenplatte 12 etwa das 1,4fache des Außendurchmessers f des Einfüllstutzens 28. Wie Fig. 4 auch zeigt, besitzt die Rückenplatte 12 benachbart zum Sprühmittelbehälter 5 einen Rand 50, der in Richtung auf den Sprühmittelbehälter 5 umgebogen ist. Dadurch ergibt sich eine weitgehend geschlossene, abgerundete Außenkontur des Sprühgeräts 1 am Übergang der Rückenplatte 12 zum Sprühmittelbehälter 5. Der umgebogene Rand 50 schirmt den Sprühmittelbehälter 5 weitgehend gegenüber dem Bediener ab und vermeidet so weitgehend, dass der Bediener dann, wenn der das Sprühgerät 1 mit den Schulterguten der Rückentrage 2 auf dem Rücken trägt, in Kontakt mit dem Sprühmittelbehälter 5 und mit am Sprühmittelbehälter 5 herunter gelaufenem Sprühmittel kommen kann.

Der Einfüllstutzen 28 besitzt zur Rückenplatte 12 der Rückentrage 2 einen Abstand 1, der in Fig. 4 schematisch in der ersten gedachten Ebene 15 eingezeichnet ist. Der Abstand 1 ist tatsächlich parallel zur Abstellfläche 17 gemessen, wie in Fig. 5 gezeigt, und nicht in der gedachten Ebene 15. Der Abstand 1 ist kleiner als die Hälfte des Außendurchmessers f des Einfüllstutzens 28. Vorteilhaft beträgt der Abstand 1 weniger als etwa 30% des Außendurchmessers f des Einfüllstutzens 28. Der Abstand 1 des Einfüllstutzens 28 zur Rückentrage 2 beträgt vorteilhaft weniger als etwa 8 cm, insbesondere weniger als etwa 6 cm. Als besonders vorteilhaft hat sich ein Abstand 1 von etwa 3 cm bis etwa 6 cm erwiesen. Der Abstand 1 beträgt vorteilhaft weniger als etwa 30%, insbesondere weniger als etwa 20% der Breite d des Sprühmittelbehälters 5. Der Abstand 1 beträgt vorteilhaft weniger als 30%, insbesondere weniger als etwa 25% der Tiefe n des Sprühmittelbehälters 5. Der Abstand 1 ist dabei zum Einfüllstutzen 28 und nicht zu dem an dem Einfüllstutzen 28 angeordneten Außengewinde 68 gemessen. Im Ausführungsbeispiel ist der Abstand 1 zum oberen Rand 50 der Rückenplatte 12 gemessen. Der Abstand 1 ist zu dem Bereich der Rückenplatte 12 zu messen, der den kleinsten Abstand zum Einfüllstutzen 28 besitzt. Die Tiefe n des Sprühmittelbehälters 5 ist vorteilhaft kleiner als die Breite d des Sprühmittelbehälters 5. Die Tiefe n beträgt vorteilhaft weniger als etwa 90%, insbesondere weniger als etwa 80% der Breite d. Dadurch ergibt sich ein kompakter Aufbau und der Schwerpunkt des Sprühmittelbehälters kann nah an der Rückenplatte 12 der Rückentrage 2 angeordnet werden. Der Sprühmittelbehälter 5 liegt dabei vorteilhaft an der Rückenplatte 12 an, wie Fig. 4 zeigt. Der Außendurchmesser f des Einfüllstutzens 28 ist vorteilhaft vergleichsweise groß, um ein leichtes Einfüllen von Sprühmittel zu ermöglichen. Der Außendurchmesser f beträgt vorteilhaft mehr als die Hälfte der Tiefe n des Sprühmittelbehälters 5. Der Außendurchmesser f beträgt vorteilhaft auch mehr als die Hälfte der Breite d des Sprühmittelbehälters. Die Tiefe n und der Abstand 1 sind dabei parallel zur Abstellfläche 17 gemessen, wie in Fig. 5 gezeigt ist.

Wie die Schnittdarstellung in Fig. 5 zeigt, besitzt die Unterkante 8 des Deckels 6 zur Abstellfläche 17 in Abstellposition 16 einen kleinsten Abstand g. Der kleinste Abstand g zwischen der Unterkante 8 des Deckels 6 und der Abstellfläche 17 besteht im Ausführungsbeispiel an der der Rückenplatte 12 zugewandten Seite des Deckels 6. Der Einfüllstutzen 28 besitzt an seinem Außenumfang ein Außengewinde 68, in das ein Innengewinde 69 des Deckels 6 eingreift. Der Außendurchmesser f des Einfüllstutzens 28 ist in Abstellposition 16 unterhalb des Außengewindes 68 gemessen. Der Außendurchmesser f des Einfüllstutzens 8 ist vorteilhaft benachbart zu einer Kante 77 gemessen, an der der Einfüllstutzen 28 in die Oberseite 8 des Sprühmittelbehälters 5 übergeht. Die Kante 77 verläuft, wie auch Fig. 4 zeigt, weitgehend kreisförmig. Die Kante 77 besitzt in Abstellposition 16 zur Abstellfläche 17 einen Abstand h, der geringfügig kleiner als der Abstand g der Unterkante 8 des Deckels 6 zur Abstellfläche 17 ist. Der Abstand h der Kante 77 zur Abstellfläche 17 ist kleiner als die Höhe b der Rückentrage 2. Dadurch ist auch die Kante 77 gegenüber dem Bediener 66 von der Rückenplatte 12 der Rückentrage 2 abgeschirmt.

Wie Fig. 5 auch zeigt, verschließt der Deckel 6 die Einfüllöffnung 7. Die Rückenplatte 12 besitzt eine Oberkante 27, die die Kante bezeichnet, die den größten Abstand zur Abstellfläche 17 besitzt. Die Oberkante 27 besitzt einen Abstand zur Abstellfläche 17, der der Höhe b der Rückentrage 2 entspricht. Wie Fig. 5 zeigt, ist der Rand 50 auch im Bereich der Oberkante 27 zum Sprührnittelbehälter 5 und zum Deckel 6 des Sprühmittelbehälters 5 hin umgebogen.

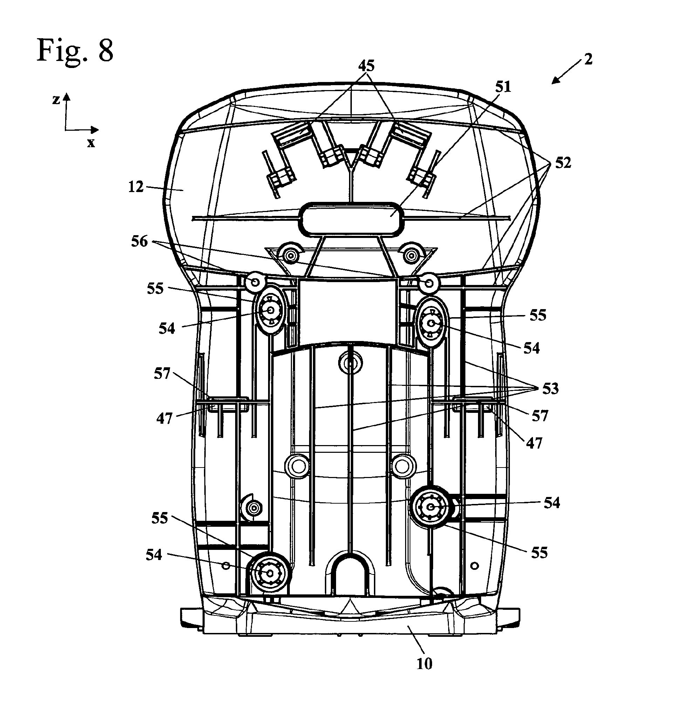

Der Sprühmittelbehälter 5 besitzt einen Bereich 78, an dem die Wandung des Sprühmittelbehälters 5 näherungsweise parallel zur Rückentrage 2 verläuft. Im Ausführungsbeispiel liegt der Sprühmittelbehälter 5 an in Fig. 8 gezeigten Querstreben 52 der Rückentrage 2 an. Es kann jedoch auch vorgesehen sein, dass der Sprühmittelbehälter 5 zur Rückenplatte 12 der Rückentrage 2 einen Abstand besitzt. Der Sprühmittelbehälter 5 ist vorteilhaft nah an der Rückenplatte 12 angeordnet, um eine günstige Gewichtsverteilung zu erreichen. In dem Bereich 78 fällt die Wandung des Sprühmittelbehälters 5 steil ab. Die Wandung ist näherungsweise eben und etwa senkrecht ausgerichtet oder zur Senkrechten geringfügig geneigt. Der steil abfallende Bereich 78 besitzt einen oberen Abschnitt 79. An dem oberen Abschnitt 79 geht der steil abfallende Bereich 78 in eine Rundung und daran anschließend in die Oberseite 9 über. In der in Fig. 5 gezeigten Schnittebene, in der die Rückentrage 2 parallel zur Raumrichtung z etwa mittig geschnitten ist, besitzt der obere Abschnitt 79 einen Abstand i zur Abstellfläche 17, der kleiner als die Höhe b der Rückentrage ist. Die Unterkante 8 des Deckels 6, die Kante 77 des Sprühmittelbehälters und der obere Abschnitt 79 des steil abfallenden Bereichs 79 des Sprühmittelbehälters 5 liegen demnach in Abstellposition 16 tiefer und näher an der Abstellfläche als die Oberkante 27 der Rückentrage 2.

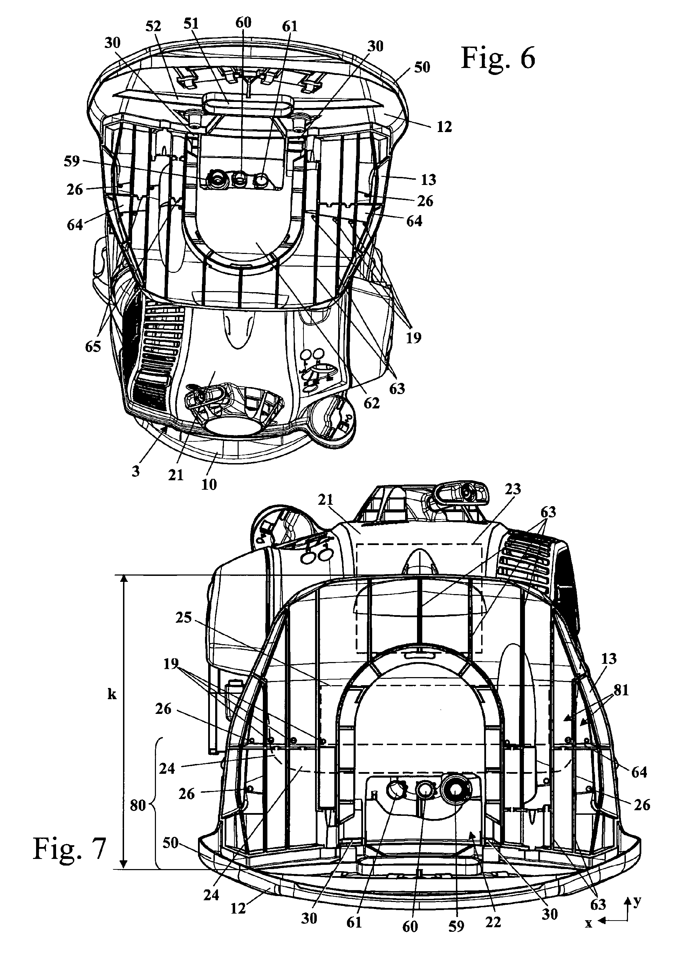

Fig. 5 zeigt auch die Anordnung des Sprühmittelbehälters 5 auf dem Trägerteil 13. Der Sprühmittelbehälter 5 liegt auf dem Trägerteil 13 auf. Das Trägerteil 13 ist an der Rückenplatte 12 der Rückentrage 2 eingehängt. Der Sprühmittelbehälter 5 besitzt einen Anschlussflansch 58, an dem auch in Fig. 6 gezeigte Anschlüsse für eine Überdruckleitung 59 in den Sprühmittelbehälter 5, eine Ansaugleitung 61 und eine Rückleitung 60 zu einer nicht gezeigten Sprühmittelpumpe vorgesehen sind. Der Anschlussflansch 58 ist in einer in Fig. 6 gezeigten Aufnahme 62 des Trägerteils 13 angeordnet. Das Trägerteil 13 besitzt an der der Rückenplatte 12 abgewandten Seite einen Rand 29, der nach oben weist und den Sprühmittelbehälter 5 an seinem dem Blasaggregat 3 zugewandten und einem Bediener 66 abgewandten Bereich umgreift. Wie Fig. 5 auch zeigt, ist am Sprühmittelbehälter 5 ein Steg 11 angeformt, der in eine Aufnahme 51 an der Rückenplatte 12 ragt und dadurch den Sprühmittelbehälter 5 zusätzlich in seiner Lage fixiert.

In Fig. 5 ist der Bediener 66 schematisch eingezeichnet. Die Oberkante 27 befindet sich im Betrieb, also wenn der Bediener 66 das Sprühgerät 1 mit den Schultergurten 46 an den Schultern trägt, benachbart zum Kopf und Nacken des Bedieners 66. Die Rückenplatte 12 verhindert dadurch, dass die Rückenplatte 12 bis auf eine Höhe über der Unterkante 8 des Deckels 6 des Sprühmittelbehälters 5 ragt, dass der Kopf des Bedieners 66 in Kontakt mit dem Sprühmittelbehälter 5 kommen kann, selbst wenn der Bediener 66 den Kopf in den Nacken legt.

Wie Fig. 5 zeigt, ist zwischen dem Gehäuse 21 des Blasaggregats 3 und der Rückenplatte 12 der Rückentrage 2 ein Zwischenraum 22 gebildet. Über den Zwischenraum 22 gelangt Sprühmittel, das vom Trägerteil 13 und der Rückenplatte 12 aufgefangen wird, zur Bodenplatte 10. Die Bodenplatte 10 besitzt eine Ablauföffnung 20, über die aufgefangenes Sprühmittel nach unten geleitet wird. Die Ablauföffnung 20 besitzt einen parallel zur Abstellfläche 17 gemessenen Abstand m zu der dem Bediener 66 zugewandten Seite 82 der Rückenplatte 12. Der Abstand m ist dabei nicht zu einem an der Rückenplatte 12 festgelegten Rückenpolster 44 gemessen, sondern zur Rückenplatte 12 selbst. Der Abstand m beträgt vorteilhaft mindestens etwa 3 cm. Besonders vorteilhaft beträgt der Abstand m etwa 4,5 cm bis etwa 6 cm. Im Ausführungsbeispiel ist ein Abstand m von etwa 5 cm bis etwa 5,5 cm vorgesehen.

In Fig. 5 ist auch der Antriebsmotor 23 schematisch gezeigt. Der Antriebsmotor 23 ist als Verbrennungsmotor ausgebildet und besitzt einen Kolben 70, der in einem Zylinder 71 hin- und hergehend gelagert ist und eine in einem Kurbelgehäuse 72 drehbar gelagerte Kurbelwelle 73 antreibt. An der Kurbelwelle 73 ist ein Schwungrad 74 angeordnet. Auf die Kurbelwelle 73 wirkt außerdem die über den Anwerfgriff 34 zu betätigende Anwerfvorrichtung 75. An der der Anwerfvorrichtung 75 abgewandten Seite ist an der Kurbelwelle 73 ein Gebläserad 25 fixiert, das den Arbeitsluftstrom in eine Gebläsespirale 76 und von dort in das Blasrohr 4 fördert. Das Gehäuse 21 besitzt eine Gehäusewand 24, die die Gebläsespirale 76 mindestens teilweise begrenzen kann und die sich mindestens teilweise im Bereich unterhalb des Anschlussflanschs 58 erstrecken kann. Die Gehäusewand 24 fällt in Abstellposition 16 zum Zwischenraum 22 hin ab.

Wie Fig. 5 auch zeigt, ist die erste gedachte Ebene 15 zur Abstellfläche 17 geneigt. Die erste gedachte Ebene 17 fällt dabei im Ausführungsbeispiel zur Rückenplatte 12 der Rückentrage 2 hin ab. In Fig. 5 ist schematisch der Winkel α zwischen der ersten gedachten Ebene 15 und der Abstellfläche 17 eingezeichnet, wobei zur besseren Darstellung der Winkel α zwischen einer Parallelen 15' zur ersten gedachten Ebene 15 eingezeichnet ist. Der Winkel α beträgt vorteilhaft weniger als 10°. Die erste gedachte Ebene 15 verläuft in Abstellposition 16 demnach näherungsweise horizontal. Der Winkel α beträgt vorzugsweise weniger als 5°, insbesondere etwa 2°. Der Winkel α ist vorzugsweise so gewählt, dass die erste gedachte Ebene 15 bei vollständig gefülltem Sprühmittelbehälter 5 aufgrund der elastischen Verformung des Trägerteils 13 durch das Gewicht des Sprühmittels horizontal verläuft.

Wie die Fig. 6 und 7 zeigen, besitzt das Trägerteil 13 Ablauföffnungen 19, die im Bereich oberhalb der Gehäusewand 24 zum Blasaggregat 3 münden. Sprühmittel, das über diese Ablauföffnungen 19 zum Blasaggregat 3 läuft, kann auf die Gehäusewand 24 tropfen und an der Gehäusewand 24 entlang in den Zwischenraum 22 herunterlaufen. Das Sprühmittel kann dadurch, dass die Gehäusewand 24 zum Zwischenraum 22 abfällt und in Richtung auf den Antriebsmotor 23 ansteigt, nicht zum Antriebsmotor 23 gelangen und dort Korrosion verursachen. Das Trägerteil 13 besitzt weitere Ablauföffnungen 26, die unmittelbar oberhalb des Zwischenraums 22 münden und das Sprühmittel direkt in den Zwischenraum 22 ableiten. Wie die Fig. 6 und 7 außerdem zeigen, sind zwischen dem Trägerteil 13 und der Rückenplatte 12 zwei Ablauföffnungen 30 gebildet. Die Ablauföffnungen 30 werden vom Trägerteil 13 und der Rückenplatte 12 begrenzt. Im Ausführungsbeispiel sind die Ablauföffnungen 30 benachbart zur Aufnahme 62 angeordnet. Es können beliebige Anzahlen von Ablauföffnungen 19, 26 und 30 in den unterschiedlichen Bereichen vorgesehen sein. Fig. 7 zeigt die Lage des Antriebsmotors 23 und des Gebläserads 25 unter dem Trägerteil 13 schematisch, so dass die Lage der Ablauföffnungen 19, 26 und 30 bezogen auf den Antriebsmotor 23 und das Gehäuse 21 mit der Gehäusewand 24 erkennbar ist. Die Ablauföffnungen 19, 26 und 30 sind so angeordnet, dass Sprühmittel nicht in Richtung zum Antriebsmotor 23 oder zu Bedienelementen des Antriebsmotors 23 wie dem Anwerfgriff 34 oder nicht gezeigten Bedienelementen für Choke und/oder Purger gelangen und diese benetzen kann.

Das Trägerteil 13 besitzt eine Tiefe k, die etwa senkrecht zur Rückenplatte 12 in der Raumrichtung y gemessen ist. Das Trägerteil 13 besitzt ausschließlich in dem Bereich 80 des Trägerteils 13 Ablauföffnungen 19, 26, 30, der der Rückenplatte 12 zugewandt liegt. Bezogen auf die Raumrichtung y bezeichnet der Bereich 80 die der Rückenplatte 12 benachbart liegende Hälfte des Trägerteils 13. Jede Ablauföffnung 19, 26, 30 besitzt zur Rückenplatte 12 einen Abstand, der weniger als die Hälfte der Tiefe k des Trägerteils 13 beträgt. Die Ablauföffnungen 19 und 26 sind jeweils in einer seitlich von Längsstegen 63 und Querstegen 64 bzw. vom Rand des Trägerteils 13 begrenzten Kammer 81 angeordnet. Die Ablauföffnungen 19 und 26 sind dabei jeweils an dem in Abstellposition 16 am tiefsten angeordneten Bereich jeder Kammer 81 angeordnet. Dadurch ist sichergestellt, dass sich kein Sprühmittel im Trägerteil 13 ansammeln kann sondern das Sprühmittel im Wesentlichen vollständig abläuft. Die Kammern 81 sind in Raumrichtung z, also in Abstellposition 16 nach oben offen und vom in Fig. 7 nicht gezeigten Sprühmittelbehälter 5 abgedeckt.

Die Fig. 6 und 7 zeigen außerdem die Überdruckleitung 59, die Rückleitung 60 und die Ansaugleitung 61 jeweils im Bereich ihres Anschlusses zum Sprühmittelbehälter 5.

Wie die Fig. 6 und 7 zeigen, besitzt die Rückenplatte 12 eine Querstrebe 52 benachbart zur Aufnahme 51. Das Trägerteil 13 besitzt eine Vielzahl von Längsstegen 63 und Querstegen 64. Die Längsstege 63 und Querstege 64 erhöhen die Stabilität des Trägerteils 13. Wie Fig. 6 zeigt, besitzen die Querstege 64 teilweise Vertiefungen 65, so dass Sprühmittel über die Querstege 64 am Sprühmittelbehälter 5 entlanglaufen kann.

Wie Fig. 8 zeigt, besitzt die Rückentrage 2 weitere Querstreben 52 sowie eine Vielzahl von Längsstreben 53. Die Querstreben 52 und die Längsstreben 53 erhöhen die Stabilität der Rückentrage 2. Das Sprühmittel kann über die Querstreben 52 abfließen. Dabei kann das Sprühmittel von den Querstreben 52 auch nach unten abtropfen. Da die dem Sprühmittelbehälter 5 und dem Blasaggregat 3 zugewandte Seite der Rückentrage 2 nicht mit dem Bediener in Kontakt kommt, ist kein gezieltes Ableiten des Sprühmittels notwendig.

Die Rückentrage 2 besitzt insgesamt vier Befestigungsöffnungen 54 für Antivibrationselemente 42 (Fig. 2). Die Befestigungsöffnungen 54 sind jeweils in einer Aufnahme 55 für das Antivibrationselement 42 angeordnet. An der Rückentrage 2 sind außerdem zwei Befestigungsöffnungen 56 für das Trägerteil 13 ausgebildet. Das Trägerteil 13 wird vorteilhaft auf Abstützungen 57 aufgelegt und über Befestigungsschrauben, die durch die Befestigungsöffnungen 56 ragen, in horizontaler Richtung an der Rückenplatte 12 fixiert. Zur Vormontage des Trägerteils 13 besitzt die Rückentrage 2 benachbart zu den Abstützungen 57 Montageöffnungen 47, die auch in Fig. 3 gezeigt sind.

## Patentansprüche

1. Rückengetragenes Sprühgerät mit einer Rückentrage (2), an der ein Blasaggregat (3) und ein Sprühmittelbehälter (5) festgelegt sind, **wobei die Rückentrage (2) eine Rückenplatte (12) umfasst, die im Betrieb benachbart zum Rücken eines Bedieners angeordnet ist,** wobei das Blasaggregat (3) Mittel zur Förderung eines Luftstroms durch ein an dem Blasaggregat (3) angeordnetes Blasrohr (4) aufweist, und wobei Mittel zur Zufuhr von Sprühmittel aus dem Sprühmittelbehälter (5) zu dem Luftstrom vorgesehen sind, wobei der Sprühmittelbehälter (5) eine Einfüllöffnung (7) besitzt, die von einem Deckel (6) verschlossen ist, wobei der Deckel (6) eine dem Sprühmittelbehälter (5) zugewandte Unterkante (8) besitzt, wobei das Sprühgerät (1) eine Abstellposition (16) besitzt, in der das Sprühgerät (1) auf einer ebenen, horizontalen Abstellfläche (17) steht und in der der Deckel (6) an einer der Abstellfläche (17) abgewandten Oberseite (9) des Sprühmittelbehälters (5) angeordnet ist, **wobei der Sprühmittelbehälter (5) in Abstellposition (16) oberhalb des Blasaggregats (3) angeordnet ist,**
**dadurch gekennzeichnet, dass** die senkrecht zur Abstellfläche (17) gemessene Höhe (b) der Rückentrage (2) mindestens etwa 80% der senkrecht zur Abstellfläche (17) gemessenen Gesamthöhe (a) des Sprühgeräts (1) beträgt **und dass in Abstell-position (16) mindestens ein Bereich (14) der Rückenplatte (12) höher liegt als mindestens ein Bereich der Unterkante (8) des Deckels (6).**

2. Sprühgerät nach Anspruch 1,
**dadurch gekennzeichnet, dass** die Einfüllöffnung (7) an einem Einfüllstutzen (28) ausgebildet ist.

3. Sprühgerät nach Anspruch 2,
**dadurch gekennzeichnet, dass** der Einfüllstutzen (28) an einer Kante (77) in eine Oberseite (9) des Sprühmittelbehälters (5) übergeht, und dass der senkrecht zur Abstellfläche (17) und benachbart zur Rückentrage (2) gemessene Abstand (h) der Kante (77) zur Abstellfläche (17) kleiner als die Höhe (b) der Rückentrage (2) ist.

4. **Sprühgerät nach Anspruch 2 oder 3,**
**dadurch gekennzeichnet, dass der parallel zur Abstellfläche (17) gemessene Abstand (l) des Einfüllstutzens (28) zur Rückentrage (2) kleiner als die Hälfte des Außendurchmessers (f) des Einfüllstutzens (28) ist.**

5. Sprühgerät nach **einem der Ansprüche 1 bis 3,**
**dadurch gekennzeichnet, dass** eine parallel zur Abstellfläche (17) gemessene Breite (e) des Bereichs (14) mindestens etwa 80% des Außendurchmessers (f) des Einfüllstutzens (28) beträgt.

6. Sprühgerät nach **einem der Ansprüche 1 bis 4,**
**dadurch gekennzeichnet, dass** die Unterkante (8) des Deckels (6) in einer ersten gedachten Ebene (15) liegt, die mit der Abstellfläche (17) einen Winkel (α) von weniger als etwa 10° einschließt.

7. Sprühgerät nach einem der Ansprüche 1 bis **6**,
**dadurch gekennzeichnet, dass** die maximale Breite (c) der Rückentrage (2) mindestens etwa 85% der Breite (d) des Sprühmittelbehälters (5) beträgt.

8. Sprühgerät nach einem der Ansprüche 1 bis **7**,
**dadurch gekennzeichnet, dass** die Breite (c) der Rückentrage (2) in jeder parallel zur Abstellfläche (17) verlaufenden Ebene mindestens etwa 80% der Breite (d) des Sprühmittelbehälters (5) in dieser Ebene beträgt.

9. Sprühgerät nach einem der Ansprüche 1 bis **8,**
**dadurch gekennzeichnet, dass** die Rückentrage (2) eine Bodenplatte (10) umfasst.

10. Sprühgerät nach Anspruch **9**,
**dadurch gekennzeichnet, dass** die Rückentrage (2) an ihrer der Bodenplatte (10) abgewandt liegenden Oberkante (27) zum Sprühmittelbehälter (5) hin umgebogen ausgebildet ist.

11. Sprühgerät nach Anspruch **9** oder **10**,
**dadurch gekennzeichnet, dass** die Bodenplatte (10) mindestens eine Ablauföffnung (20) besitzt.

12. Sprühgerät nach Anspruch **11,**
**dadurch gekennzeichnet, dass** der parallel zur Abstellfläche (17) gemessene Abstand (m) der Ablauföffnung (20) zu der einem Bediener zugewandten Seite (82) der Rückenplatte (12) mindestens etwa 3 cm beträgt.

13. Sprühgerät nach einem der Ansprüche **9** bis **12**,
**dadurch gekennzeichnet, dass** der Sprühmittelbehälter (5) an der Rückentrage (2) über ein Trägerteil (13) gehalten ist.

14. Sprühgerät nach Anspruch **13,**
**dadurch gekennzeichnet, dass** das Trägerteil (13) mindestens eine Ablauföffnung (19, 26) besitzt.

15. Sprühgerät nach Anspruch **14,**
**dadurch gekennzeichnet, dass** das Blasaggregat (3) einen Antriebsmotor (23) und ein von dem Antriebsmotor (23) angetriebenes Gebläserad (25) umfasst, die in einem Gehäuse (21) angeordnet sind, und dass zwischen dem Blasaggregat (3) und der Rückenplatte (12) ein Zwischenraum (22) gebildet ist.

16. Sprühgerät nach Anspruch **15,**
**dadurch gekennzeichnet, dass** mindestens eine Ablauföffnung (19) in Abstellposition (16) oberhalb einer Gehäusewand (24) des Gehäuses (21) angeordnet ist, die zu dem Zwischenraum (22) hin abfällt.

17. Sprühgerät nach Anspruch **15** oder **16,**
**dadurch gekennzeichnet, dass** mindestens eine Ablauföffnung (26) in Abstellposition (16) oberhalb des Zwischenraums (22) angeordnet ist.

18. Sprühgerät nach einem der Ansprüche **13** bis **17**,
**dadurch gekennzeichnet, dass** mindestens eine Ablauföffnung (30) zwischen dem Trägerteil (13) und der Rückenplatte (12) ausgebildet ist.

## Claims

1. Back-mounted sprayer, comprising a back frame (2) on which a blower unit (3) and a spray medium container (5) are located, wherein the back frame (2) comprises a back plate (12) which is located adjacent to the back of an operator in operation, wherein the blower unit (3) comprises means for conveying an air stream through a blow pipe (4) located on the blower unit (3), and wherein means for supplying spray medium from the spray medium container (5) into the air stream are provided, wherein the spray medium container (5) has a filler hole (7) closed by a cover (6), wherein the cover (6) has a bottom edge (8) facing the spray medium container (5), wherein the sprayer (1) has a parking position (16) in which the sprayer (1) stands on a level, horizontal parking surface (17) and the cover (6) is situated on a top side (9) of the spray medium container (5) remote from the parking surface (17), the spray medium container (5) being located above the blower unit (3) in the parking position (16),
**characterised in that** the height (b) of the back frame (2), as measured perpendicular to the parking surface (17), amounts to at least approximately 80% of the overall height (a) of the sprayer (1), as measured perpendicular to the parking surface (17), and **in that** in the parking position (16) at least one region (14) of the back plate (12) lies at a higher level than at least one region of the bottom edge (8) of the cover (6).

2. Sprayer according to claim 1,
**characterised in that** the filler hole (7) is formed on a filler neck (28).

3. Sprayer according to claim 2,
**characterised in that** the filler neck (28) merges at an edge (77) into a top side (9) of the spray medium container (5), and **in that** the distance (h) of the edge (77) from the parking surface (17), as measured perpendicular to the parking surface (17), is less than the height (b) of the back frame (2).

4. Sprayer according to claim 2 or 3,
**characterised in that** the distance (1) of the filler neck (28) from the back frame (2), as measured parallel to the parking surface (17), is less than half the outer diameter (f) of the filler neck (28).

5. Sprayer according to any of claims 1 to 3,
**characterised in that** a width (e) of the region (14), as measured parallel to the parking surface (17), is at least approximately 80% of the outer diameter (f) of the filler neck (28).

6. Sprayer according to any of claims 1 to 4,
**characterised in that** the bottom edge (8) of the cover (6) lies in a first imaginary plane (15) which encloses with the parking surface (17) an angle (α) of less than approximately 10°.

7. Sprayer according to any of claims 1 to 6,
**characterised in that** the maximum width (c) of the back frame (2) is at least approximately 85% of the width (d) of the spray medium container (5).

8. Sprayer according to any of claims 1 to 7,
**characterised in that** the width (c) of the back frame (2) in each plane extending parallel to the parking surface (17) is at least approximately 80% of the width (d) of the spray medium container (5) in this plane.

9. Sprayer according to any of claims 1 to 8,
**characterised in that** the back frame (2) comprises a base plate (10).

10. Sprayer according to claim 9,
**characterised in that** the back frame (2) is bent towards the spray medium container (5) at its top edge (27) located remote from the base plate (10).

11. Sprayer according to claim 9 or 10,
**characterised in that** the base plate (10) has at least one drain opening (20).

12. Sprayer according to claim 11,
**characterised in that** the distance (m) of the drain opening (20) from a side (82) of the back plate (12) which faces the operator, as measured parallel to the parking surface (17), is at least approximately 3 cm.

13. Sprayer according to any of claims 9 to 12,
**characterised in that** the spray medium container (5) is held on the back frame (2) via a support part (13).

14. Sprayer according to claim 13,
**characterised in that** the support part (13) has at least one drain opening (19, 26).

15. Sprayer according to claim 14,
**characterised in that** the blower unit (3) comprises a motor (23) and an impeller (25) driven by the motor (23), these components being located in a housing (21), and **in that** a space (22) is formed between the blower unit (3) and the back plate (12).

16. Sprayer according to claim 15,
**characterised in that** at least one drain opening (19) is in the parking position (16) located above a housing wall (24) of the housing (21), which housing wall (24) drops towards the space (22).

17. Sprayer according to claim 15 or 16,
**characterised in that** at least one drain opening (26) is in the parking position (16) located above the space (22).

18. Sprayer according to any of claims 13 to 17,
**characterised in that** at least one drain opening (30) is formed between the support part (13) and the back plate (12).

## Revendications

1. Appareil de vaporisation porté sur le dos, avec un support dorsal (2) auquel sont fixés un groupe de soufflage (3) et un récipient de produit à vaporiser (5), étant précisé que le support dorsal (2) comprend une plaque dorsale (12) qui, en fonctionnement, se trouve près du dos d'un utilisateur, que le groupe de soufflage (3) comporte des moyens pour acheminer un courant d'air à travers un tuyau de soufflage (4) disposé sur ledit groupe de soufflage (3), et qu'il est prévu des moyens pour amener le produit à vaporiser dans le courant d'air, à partir du récipient (5), que ledit récipient (5) présente une ouverture de remplissage (7) qui est fermée par un couvercle (6), que le couvercle (6) présente un bord inférieur (8) tourné vers le récipient (5), que l'appareil de vaporisation (1) présente une position de rangement (16) dans laquelle il est posé sur une surface d'entreposage horizontale plane (17) et dans laquelle le couvercle (6) est disposé sur un côté du récipient (5) opposé à la surface d'entreposage (17), et que le récipient (5), dans la position de rangement (16), est disposé au-dessus du groupe de soufflage (3), **caractérisé en ce que** la hauteur (b) du support dorsal (2), mesurée perpendiculairement à la surface d'entreposage (17), représente au moins environ 80% de la hauteur totale (a) de l'appareil de vaporisation (1), mesurée perpendiculairement à la surface d'entreposage (17), et **en ce que** dans la position de rangement (16), au moins une zone (14) de la plaque dorsale (12) se trouve plus haut qu'au moins une zone du bord inférieur (8) du couvercle (6).

2. Appareil de vaporisation selon la revendication 1,
**caractérisé en ce que** l'ouverture de remplissage (7) est formée sur une tubulure de remplissage (28).

3. Appareil de vaporisation selon la revendication 2,
**caractérisé en ce que** la tubulure de remplissage (28) se prolonge, sur un bord (77), par un côté supérieur (9) du récipient de produit de vaporisation (5), et **en ce que** la distance (h), mesurée perpendiculairement à la surface d'entreposage (17) et près du support dorsal (2), entre le bord (77) et ladite surface d'entreposage (17) est inférieure à la hauteur (b) du support dorsal (2).

4. Appareil de vaporisation selon la revendication 2 ou 3,
**caractérisé en ce que** la distance (1), mesurée parallèlement à la surface d'entreposage (17), entre la tubulure de remplissage (28) et le support dorsal (2), est inférieure à la moitié du diamètre extérieur (f) de ladite tubulure de remplissage (28).

5. Appareil de vaporisation selon l'une des revendications 1 à 3,
**caractérisé en ce qu'**une largeur (e) de la zone (14), mesurée parallèlement à la surface d'entreposage (17), représente au moins environ 80 % du diamètre extérieur (f) de la tubulure de remplissage (28).

6. Appareil de vaporisation selon l'une des revendications 1 à 4,
**caractérisé en ce que** le bord inférieur (8) du couvercle (6) se trouve dans un premier plan imaginaire (15) qui définit avec la surface d'entreposage (17) un angle (α) inférieur à environ 10°.

7. Appareil de vaporisation selon l'une des revendications 1 à 6,
**caractérisé en ce que** la largeur maximale (c) du support dorsal (2) représente au moins environ 85% de la largeur (d) du récipient de produit à vaporiser (5).

8. Appareil de vaporisation selon l'une des revendications 1 à 7,
**caractérisé en ce que** la largeur (c) du support dorsal (2), dans n'importe quel plan parallèle à la surface d'entreposage (17), représente au moins environ 80% de la largeur (d) du récipient de produit à vaporiser (5) dans ce plan.

9. Appareil de vaporisation selon l'une des revendications 1 à 8,
**caractérisé en ce que** le support dorsal (2) comprend une plaque de fond (10).

10. Appareil de vaporisation selon la revendication 9,
**caractérisé en ce que** le support dorsal (2), sur son bord supérieur (27) opposé à la plaque de fond (10), est recourbé en direction du récipient de produit à vaporiser (5).

11. Appareil de vaporisation selon la revendication 9 ou 10,
**caractérisé en ce que** la plaque de fond (10) présente au moins une ouverture d'écoulement (20).

12. Appareil de vaporisation selon la revendication 11,
**caractérisé en ce que** la distance (m), mesurée parallèlement à la surface d'entreposage (17), entre l'ouverture d'écoulement (20) et le côté (82) de la plaque dorsale (12) tourné vers un utilisateur est d'au moins environ 3 cm.

13. Appareil de vaporisation selon l'une des revendications 9 à 12,
**caractérisé en ce que** le récipient de produit à vaporiser (5) est fixé au support dorsal (2) par l'intermédiaire d'un élément porteur (13).

14. Appareil de vaporisation selon la revendication 13,
**caractérisé en ce que** l'élément porteur (13) présente au moins une ouverture d'écoulement (19, 26).

15. Appareil de vaporisation selon la revendication 14,
**caractérisé en ce que** le groupe de soufflage (3) comprend un moteur d'entraînement (23) et une roue de soufflage (25), entraînée par celui-ci, qui sont disposés dans un boîtier (21), et **en ce qu'**un espace intermédiaire (22) est formé entre le groupe de soufflage (3) et la plaque dorsale (12).

16. Appareil de vaporisation selon la revendication 15,
**caractérisé en ce qu'**au moins une ouverture d'écoulement (19), dans la position de rangement (16), est disposée au-dessus d'une paroi (24) du carter (21) qui descend en direction de l'espace intermédiaire (22).

17. Appareil de vaporisation selon la revendication 15 ou 16,
**caractérisé en ce qu'**au moins une ouverture d'écoulement (26), dans la position de rangement (16), est disposée au-dessus de l'espace intermédiaire (22).

18. Appareil de vaporisation selon l'une des revendications 13 à 17,
**caractérisé en ce qu'**au moins une ouverture d'écoulement (30) est formée entre l'élément porteur (13) et la plaque dorsale (12).
